# EUROPEAN PATENT APPLICATION

(11) **EP 4 636 658 A1**
(43) Date of publication of application: **22.10.2025**
(21) Application number: 24170653.0
(22) Date of filing: 16.04.2024
(51) Int. Cl.: G06N 10/40, G06N 10/70, B82Y 20/00, G02B 6/43, H04B 10/70

(54) **A PHOTONIC CIRCUIT FOR GENERATING MULTI-PARTITE QUANTUM STATES BETWEEN QUBITS**

(71) Applicant: Nederlandse Organisatie voor toegepast-natuurwetenschappelijk Onderzoek TNO, 2595 DA 's-Gravenhage (NL)
(72) Inventor: Van Zwet, Erwin John, 2595 DA s'-Gravenhage (NL)
(74) Representative: V.O.

(57) **Abstract**

A photonic circuit for generating multi-partite entangled quantum states between qubits, comprising: A first grid 200 of optical interconnects suitable for providing photons of suitable laser sources L1-L4 to one or more single photon sources 20, preferably within the unit cells 100 for generating a single photon e; said one or more single photon sources 20 having output terminals e photonically coupled to a second grid 300 of optical interconnects.

The photonic circuit may comprise at least one single photon detector 30 having input terminals photonically coupled to a second grid 300. A further grid may be provided for quantum mechanically conditioning of the qubits in said unit cells into a specific quantum state. The optical switches of the grid 300 may selectively direct said single photon e over said grid 300 between unit cells 100 to a selected qubit 10 in a selected unit cell 100.

## Description

### Field of the invention

The invention relates to a photonic circuit for generating multi-partite quantum states. Photonic integrated circuits have been suggested as promising for new generations of quantum devices.

### Background

Quantum devices in which two or more quantum states can exist in a superposition are to be used, e.g. for quantum information processing and sensing.

In addition, multiple qubits can be combined to store information. By physically connecting, and implementing appropriate interactions between physical qubits, arbitrary quantum states can be stored in multi-qubit structures known in literature as logical qubits. Quantum error correction can be applied on these logical qubits in order to improve their performance compared to the underlying physical qubits.

A multitude of logical qubits that is connected to exchange and process quantum information and thus perform quantum computations, is referred to as a quantum processor, quantum chip or a quantum computer. A known arrangement is a grid of qubits with a layout on a 2D planar surface, e.g. manufactured by lithographic techniques.

One of the more promising candidates for quantum computing is computing between qubits with an optical interface. One example of such qubits with an optical interface are color centers in photonic crystal nanobeam cavities that can be coupled to photonic integrated circuits e.g. as known from Olthaus, Optimal Photonic Crystal Cavities for Coupling Nanoemitters to Photonic Integrated Circuits, Adv. Quantum Technology 2020, 3, 1900084. Quantum dots and trapped ions are examples of other qubits with an optical interface, of which the first are solid state qubits.

One of the main building blocks for quantum error correction are multi-partite entangled quantum states like the so called Greenberger-Horne-Zeilinger (GHZ) state.

GHZ states can be composed from multiple so called Einstein, Podolsky, and Rosen (EPR) pairs, which is in practice time consuming due to the limited success probability and the decoherence of the already generated EPR pairs during the generation process of new EPR pairs. A need exists to provide a photonic circuit for generating multi partite entangled quantum states between different combinations of the qubits in the system. In particular, it is aimed to increase the success probability of making GHZ states available on the photonic circuit, for an optimal implementation of the Quantum error correction code.

### Summary

To this end, a photonic circuit for generating multi-partite entangled quantum states between qubits, is proposed according to the features of claim 1.

In particular, the circuit comprises a grid of unit cells that are photonically coupled by optical interconnects and each unit cell contains at least one qubit with an optical interface, and one or more optical switches that allow a dynamic reconfiguration of the optical interconnects.

By having such optical switches a flexible topology is offered wherein a unit cell can be selectively photonically coupled to another unit cell to a selected specific unit cell that has been selected to have a proper quantum mechanical condition for carrying out a designated quantum computational procedure. Detection of a single photon event may be selectively routed towards a single photon detector within the unit cell, another unit cell and/or one to another detection circuit.

By the flexible architecture, direct generation of three, four or even more, multipartite states is possible in which the qubits with an optical interface can be interconnected to at least all nearest neighbours, and even with the possibility to select the weight of the GHZ state on the fly. This architecture makes it possible to provide a photonic coupling which is not a priory fixed, but that calculates with the availability of a properly conditioned qubit. This may offer the benefit of logical qubits and run error correction codes like for example the surface code, so that by providing suitable instructions to the splitters, an appropriate unit cell can be involved in the photonic coupling of the unit cells available.

### Brief description of the drawings

Figure 1A shows a unit cell according to an exemplary embodiment;
Figure 1B shows a schematic representation of an optical qubit that can be probed in transmission;
Figure 1C shows a schematic representation of a single photon source;
Figure 2A schematically shows the single photon event direction bypassed;
Figure 2B schematically shows the single photon probed in transmission through the qubit with the optical interface;
Figure 3 shows a schematic representation of a photonic circuit according to an embodiment of the invention, wherein an optical photon is routed from a single photon source via a parallel path of two optical qubits in transmission to a single photon detector;
Figure 4A, B schematically show various transmission paths of a single photon source to a single photon detector, via an optical circuit that allows a dynamic reconfiguration of the optical interconnects.

### Description of exemplary embodiments

Hereinafter, exemplary embodiments of the present invention will be described with reference to the accompanying drawings.

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

The term "photonic circuit" may include any structural hardware arrangement of a one, two or more dimensional grid having a capability of executing quantum operations with optical qubits and optional qubits without an optical interface in order to provide a certain basic function. Preferably each unit cell in the grid contains a single photon source and 1 or more single photon detectors. Although it is also possible to place the single photon source and or the detectors outside the unit cell. Sharing will be possible at the level of lines or rows in a matrix, or sharing between all unit cells. Optical switches may be used to make the connection between them. The unit cells can be linked to bus waveguides that deliver the light needed to operate and control the qubit with the optical interface. A skilled person is typically aware of how to operate or implement a circuit in the context of the description.

The term "signal line" is used to signify optical information exchanged, which may be in any form where it is not excluded that other signal lines are available, but merely to signify that a certain connectivity is available. This may also indicate indirect connectivity, that is, a signal line may be provided by indirect signaling, for example, via another functional device.

While example embodiments are shown for systems and methods, also alternative ways may be envisaged by those skilled in the art having the benefit of the present disclosure for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

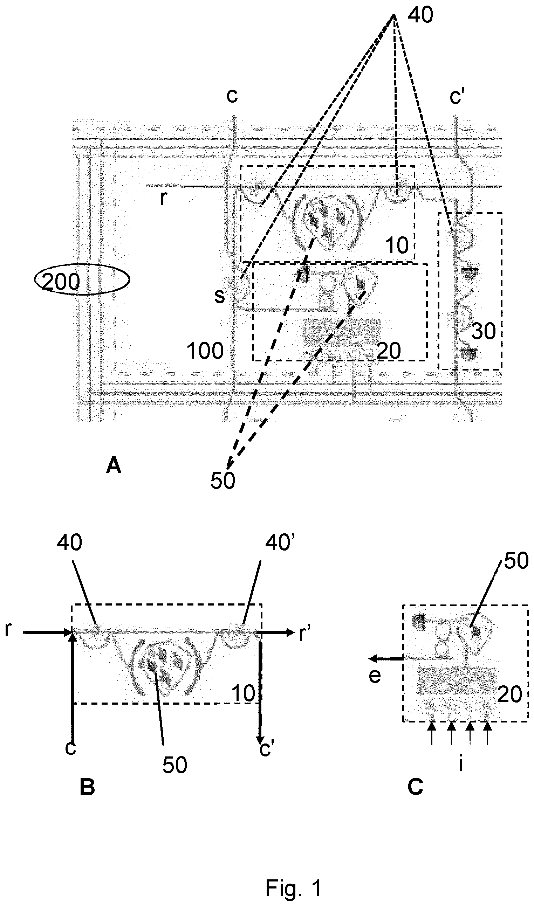

Turning to Figure 1a, a single unit cell 100 is shown with a switchable optical qubit 10 e.g. formed by a single color center 50. Different types of color centers can be used, such as NV centers or group-IV defects (SiV, SnV etc.) in diamond, color centers in SiC, in silicon or other solid state host materials. A similar architecture might also be used for non solid state color centers like trapped ions, or cold atoms. The color center 50 can be placed in an optical waveguide, or in an optical cavity in order to enhance the interaction and collection efficiency. The unit cell further shows in this embodiment a single photon source 20 although the source may be outside the cell also. The unit cell may further comprise (a pair of) single photo detectors 30. These can be either SNSPDs or SPADs known to a skilled person. Beam splitters 40 in the switchable photon detectors 30 can be used to erase the "which path" information. This is a prerequisite for entanglement generation. In the unit cell 1x2 and 2x2 optical switches 40 are schematically illustrated that are needed to dynamically reconfigure the routing of the light in order to generate GHZ states between (at least) any combination of nearest neighbors.

Aspects of Fig 1A can be further viewed in Fig 1B and Fig 1C, showing an optical switching path for single photon events entering the switchable qubit 10. Optical switch 40 can selectively direct a single photon event propagating through a signal line on a photonic grid rcc' which may be a rowline r or a column line c, either bypassing qubit 10 or transmitted through it, which can be switched by optical switch 40' selectively into a rowline r' or a column line c'.

Switches 40, 40' are examples of programmable optics to selectively direct said single photon over signal lines, forming a grid of column lines and row lines between unit cells, and which programmable optics are equipped to selectively direct said single photon event to a selected qubit having the optical interface in a selected unit cell. A further grid for programming said programmable optics is left for clarity reasons. The optical switch s is operable in programmable split mode, so that said single photon event travels via said first column wave guide c to a neighbouring unit cell (i.e. upwards in the figure), and/or is directed towards said qubit 10 (i.e. sidewards) in a 0/100, 50/50 or other desired fractional combination.

By having programmable optics s, 40, 40' a flexible topology is offered wherein a unit cell can be selectively photonically coupled to another unit cell via a grid r c c' , to a selected specific unit cell that has been selected to have a proper quantum mechanical condition for carrying out a designated quantum computational procedure. Detection of a single photon event may be selectively routed towards a single photon detector 30 within the unit cell 100, or another unit cell and/or one to another detection circuit.

Fig 1B shows a color center 50 that is photonically coupled between first column c and second column guide c'.

Fig 1C shows a schematic view of a single photon source 20, which may be formed by a color center 50 with an optical interface acting as a single photon source. Different implementations for a single photon source 20 are possible and known to the skilled person, for example by providing weak coherent pulse. Alternatively a single photon source 20 can be implemented as a heralded entangled photon source or a single photon source based on a 2 or 3 level system. Said grid suitable for providing photon signals i of suitable laser sources to one or more single photon sources 20 for generating a single photon event e; said one or more single photon sources having input terminals i photonically coupled to a grid 200 of photonic wave guides. This is not required, the single photon sources may be remote from the unit cell 100.

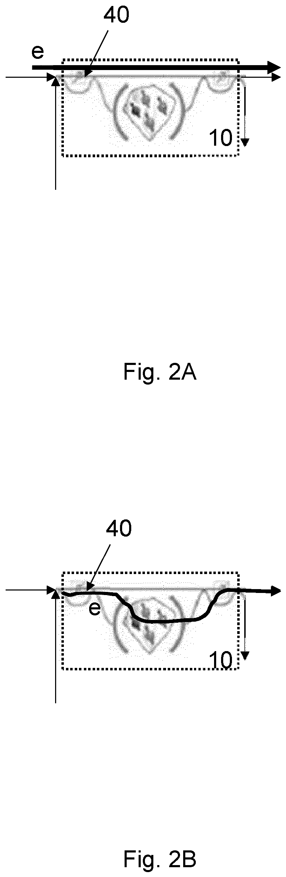

Fig 2A and Fig 2B further illustrate the course of a single photon event e either in bypass mode (Fig 2A) or in transmission mode (Fig 2B) of the switchable logical qubit, selectively switched by switch 40.

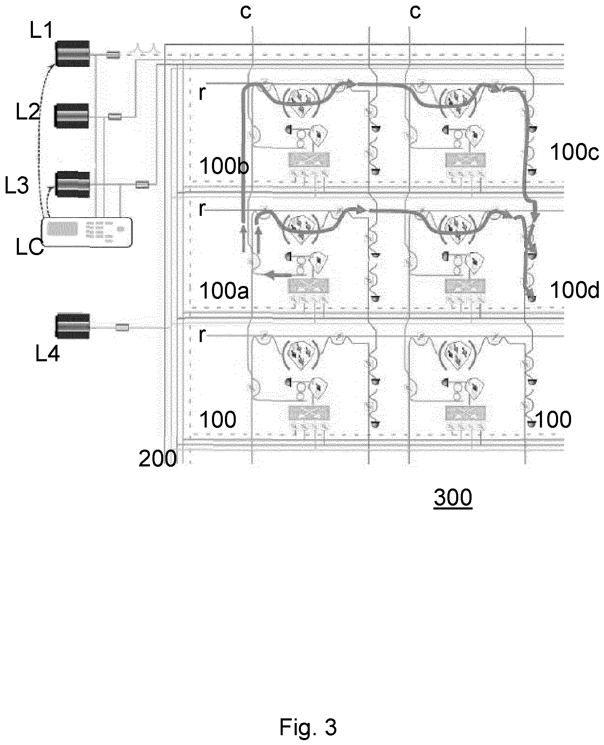

In Fig 3, by way of example a photonic grid 300 is illustrated of unit cells 100, each having at least a switchable qubit. The lasers in this non-limiting example are configured to provide the following:
1. A laser for charge control of the color center (L4, wavelength 515 nm or 532 nm).
2. A laser for initialization of the electron spin of the color center (L3, wavelength for example 620 nm).
3. A laser for readout of the electron spin (L2, wavelength for example 619 nm).
4. L1 is the same laser as laser 2, but instead of CW, a pulse train is provided. A single pulse of this pulse train can be used as "optical pi-pulse" for entanglement generation.

In the example, a photon event e is generated in unit cell 100a, which is switched in a 50/50 way to qubits within unit cells 100a and 100b respectively, which events, each in transmission mode through respective qubits, are propagated to unit cells 100c and 100d respectively. The splitter in 100d is used in a 50/50 way to combine the optical paths again, after which the detection can be performed in unit cell 100d.

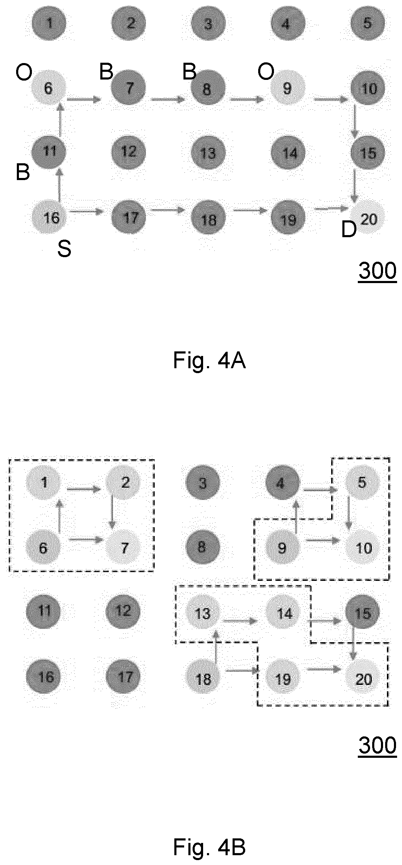

Figure 4A and 4B show abstract diagrams of a photonic grid 300 wherein at least some of the plurality of unit cells 1--20 comprise programmable optics to selectively direct said single photon e over said grid 300 between unit cells, and wherein said programmable optics are equipped to selectively direct a single photon event e to a selected qubit of a selected unit cell 1-20 having an optical interface that can be photonically coupled to execute different functions in a quantum mechanical (computational) operation. It should be mentioned that the details of the photonic grid 300, as illustrated in detail by the rcc' grid of the preceding figures, are not of particular essence, as long as the grid is capable of selectively transmitting photonic events which may or may not have been generated within grid 300 in designated sources S, via qubits within these cells (1-20) performing a quantum mechanical operation (e.g.: a NOT operation) to be detected within or outside the grid 300, but preferably by detectors D within designated unit cells (1-20) of the grid 300.

For example, a photonic event S is generated in unit cell 16 of Figure 4A, by activating a photonic source within the cell. The event is propagated by selective switching to neighbouring cells 11 and 17, which are in a bypass mode B, where neighboring cell 6 provides a quantum mechanical operation O in a correspondingly switched qubit within the cell 6. The event is transmitted via cells 7 and 8 in bypass mode B to another cell 9 performing a further operation O, to be finally detected D by unit cell 20 having a suitable detector.

It is shown in Figure 4B that various quantum mechanical procedures can be carried out at the same time by suitable switching, greatly enhancing the preparation and execution of qubits necessary for carrying out a desired operation, where unit cells are selected based on a principle of being nearest in availability. As is shown in Fig 4B, without any bypass a quantum operation is carried out by cells 1 and 2, based on a photon generation in cell 6, which is detected in cell 7. Simultaneously, or at least overlapping in time, a photon can be generated in cell 9, bypassed via cell 4 and operated in cell 5, to be detected in cell 10.

A third example is a photon event generated in cell 18, operated in parallel via either a combination of cells 13 and 14 or cell 19, to arrive at detector in cell 20.

Further aspects of the invention are covered by the following characterizations:
A photonic circuit for generating multi-partite entangled quantum states between qubits, comprising:
o a grid 200 of a plurality of photonic wave guides suitable for providing photons of suitable laser sources (L1-L4) to one or more single photon sources 20 for generating a single photon e; said one or more single photon sources having input terminals i photonically coupled to said grid 200 of photonic wave guides;
o at least one single photon detector 30;
o a second grid 300 of photonic wave guides (rcc') defining a plurality of unit cells 100 photonically coupled to said one or more single photon sources 20,
o each of said unit cells 100 having a qubit 10 with an optical interface photonically coupled to said second grid 300 of photonic wave guides;
o a third grid (not shown) for quantum mechanically conditioning qubits in said unit cells into a specific quantum state;
o wherein at least some of the plurality of unit cells 100 comprise programmable optics 40 to selectively direct said single photon e over said second grid 300 between unit cells 100, and wherein said programmable optics 40 are equipped to selectively direct said single photon event e to a selected qubit 10 having the optical interface in a selected unit cell 100; and
o a fourth grid for programming said programmable optics.

By having said programmable optics a flexible topology is offered wherein a unit cell 100 can be selectively photonically coupled to another unit cell via said second grid 300, to a selected specific unit cell that has been selected to have a proper quantum mechanical condition for carrying out a designated quantum computational procedure. Detection of a single photon event may be selectively routed towards a single photon detector within the unit cell, another unit cell and/or one to another detection circuit.

The photonic circuit may comprise a first grid of optical interconnects defining a plurality of unit cells 100 that are photonically coupled, wherein each unit cell comprises at least one qubit 10 with an optical interface, and one or more optical switches 40 that allow a dynamic reconfiguration of the optical interconnects.

The optical switches allow dynamical routing of the photonic events between on the fly configurable combinations of unit cells.

A photonic circuit according to any preceding claim, wherein the photonic interconnects between the unit cells are implemented by photonic waveguides r, c, c'.

The photonically coupled qubit may be placed in an optical cavity.

The photonically coupled qubit in the optical cavity may be probed in transmission, in order to generate multi partite entangled states between qubits residing in different unit cells.

A first grid of optical interconnects may be provided suitable for providing photons of suitable laser sources L1-L4 to one or more single photon sources 20, preferably within the unit cells 100 for generating a single photon e; said one or more single photon sources 20 having output terminals e photonically coupled to a second grid 300 of optical interconnects.

The photonic circuit may comprise at least one single photon detector 30 having input terminals photonically coupled to said second grid 300. A further grid may be provided for quantum mechanically conditioning qubits in said unit cells into a specific quantum state.

The optical switches of the grid 300 may selectively direct said single photon e over said grid 300 between unit cells 100 to a selected qubit 10 in a selected unit cell 100. In an embodiment, the optical switches comprise one splitter s having an input coupled to a column wave guide c; one output terminal coupled to the column wave guide c; and another output terminal coupled to a row wave guide r to selectively direct a single photon event e from said first column wave guide c to said row wave guide r;
another splitter 40 provided with an input terminal photonically coupled to the other output terminal of the one splitter s, one output terminal coupled to the row wave guide r; and one output terminal photonically coupled to the optical interface of the qubit 10 provided in said unit cell 100 to selectively direct said single photon event e from said first column wave guide c to said qubit 10;
a further splitter 40' provided with an input terminal photonically coupled to the row wave guide r downstream of another output terminal of another splitter 40; another input terminal photonically coupled to the optical interface of the qubit 10, an output terminal coupled to the row wave guide r and another output terminal coupled to another column wave guide c' to selectively direct said single photon event e from said row wave guide r to said another column row wave guide c.

## Claims

1. A photonic circuit for generating multi-partite entangled quantum states between qubits, comprising:
- a grid of unit cells that are photonically coupled by optical interconnects and each unit cell contains at least one qubit with an optical interface, and one or more optical switches that allow a dynamic reconfiguration of the optical interconnects.

2. A photonic circuit according to the preceding claim, wherein a unit cell can contain a single photon source that can be used to probe a photonically coupled qubit, that can be either located in the same unit cell, or in another unit cell in the grid.

3. A photonic circuit according to the preceding claim, wherein in the grid of unit cells a unit cell can contain one or more single photon detectors, for measuring one or more qubits that are located in the same unit cell, or in another unit cell in the grid.

4. A photonic circuit according to the preceding claim, wherein the grid of unit cells where each unit cell contains optical switches to allow dynamical routing of the light between on the fly configurable combinations of unit cells.

5. A photonic circuit according to the preceding claim, wherein the grid of unit cells as defined in claim 4 where the optical switches are implemented by interferometers, enabling to use the switch as a configurable photonic beam splitter.

6. A photonic circuit according to the preceding claim, wherein the grid of unit cells as defined in claim 4, where the photonic interconnects between the unit cells are implemented by photonic waveguides, in a data bus like structure, where each unit cell can be dynamically connected or disconnected from the data bus.

7. A photonic circuit according to the preceding claim, wherein the grid of unit cells as defined in claim 1 where multi partite entangled states can be generated between qubits residing in different unit cells.

8. A photonic circuit according to the preceding claim, wherein the grid of unit cells as defined in claim 1, in which the photonically coupled qubit is placed in an optical cavity.

9. A photonic circuit according to the preceding claim, wherein the grid of unit cells as defined in claim 7, in which the optical cavity, that contains the qubit, is probed in transmission.
